Europäisches Patentamt

European Patent Office

Office européen des brevets

(19)

(11) Veröffentlichungsnummer: **0 039 939**
**B1**

(12) # EUROPÄISCHE PATENTSCHRIFT

(45) Veröffentlichungstag der Patentschrift:
06.03.85

(21) Anmeldenummer: 81103599.7

(22) Anmeldetag: 11.05.81

(51) Int. Cl.⁴: **B 65 D 5/24,** B 65 D 77/20,
B 65 D 81/34

(54) **Schalenförmiger Behälter.**

(30) Priorität: 12.05.80 US 148908
17.11.80 US 207682

(43) Veröffentlichungstag der Anmeldung:
18.11.81 Patentblatt 81/46

(45) Bekanntmachung des Hinweises auf die Patenterteilung:
06.03.85 Patentblatt 85/10

(84) Benannte Vertragsstaaten:
AT CH DE FR GB IT LI

(56) Entgegenhaltungen:
CH - A - 509 910
DE - A - 2 819 708
FR - A - 1 338 461
US - A - 2 782 977
US - A - 4 114 797
US - A - 4 183 458

(73) Patentinhaber: **Federal Paper Board Co. Inc.,
75 Chestnut Ridge Road, Montvale New
Jersey 07645 (US)**

(72) Erfinder: **Manizza, Guelfo A., 23 Cobble Place, Blauvelt
New York 10913 (US)**
Erfinder: **Brown, William M., 27 Chipmunk Lane, Darien
Connecticut 06820 (US)**

(74) Vertreter: **Hutzelmann, Gerhard, Ulmer
Strasse 18 Postfach 26 80, D-8960 Kempten/Allgäu (DE)**

BUNDESDRUCKEREI BERLIN

**Beschreibung**

Die Erfindung betrifft einen schalenförmigen Behälter zum Erzeugen und Verpacken von Brot oder ähnlichen Backprodukten, der aus einem einzigen Kartonzuschnitt geformt ist und mit einer siegelfähigen, hitzebeständigen Beschichtung versehen ist, wobei die Beschichtung einen größeren Wärmekoeffizienten als das Kartonmaterial hat, wobei der Behälter einen Boden aufweist, sowie daran angelenkte Seitenwände und Endwände, und an End- und Seitenwänden angelenkte, untereinander durch jeweils eine Faltlinie verbundene dreieckige Zwickelflächen, welche die aneinander angrenzenden Seiten- und Endwände untereinander verbinden, wobei die zusammengefalteten Zwickelflächen an der Außenseite von einander gegenüberliegenden Seitenwänden angelegt sind und wobei die Seitenwände Flansche aufweisen.

Derartige Behälter werden in der Backindustrie für Produkte verwendet, die in einem Ofen gebacken und anschließend, ohne aus dem Behälter entfernt zu werden, auf den Markt kommen. Diese Produkte, wie z. B. Kuchen, Feinbackwaren, oder dergleichen, befinden sich anfangs im allgemeinen im fließfähigen Zustand, d. h., sie sind flüssig oder halbflüssig, weshalb der Behälter flüssigkeitsdicht sein muß, wenn er bis zu einer bestimmten Höhe mit dem Produkt gefüllt wird. Außerdem muß er während des Backprozesses den auftretenden Temperaturen ohne Beschädigung standhalten, so daß das gebackene Produkt, ohne aus dem Behälter entnommen zu werden, auf den Markt kommen kann.

Für solche Produkte wurden bisher gepreßte oder anderweitig geformte Behälter aus dünner Metallfolie oder verhältnismäßig steifen Metallblättern verwendet. Derartige Behälter sind aber teuer und sehen nicht besonders gut aus, da sie schlecht in dekorativer Weise bedruckbar sind.

Es wurde zwar versucht, nichtmetallische Behälter für den genannten Zweck einzusetzen (US-A-4 114 797), die dabei verwendete Kunststoffbeschichtung führte jedoch in den Seitenwänden der Behälter zu einer erheblichen Schrumpfdeformierung, was ein äußerst unattraktives Aussehen herbeiführte. Daraus ergab sich die Notwendigkeit, Behälter mit einer größeren Festigkeit und Steifigkeit speziell in den Seitenwänden zu entwickeln, so daß sie in der Lage sind, ihr gutes Aussehen während des Backprozesses sowohl in einem Mikrowellenofen als auch in einem konventionellen Ofen beizubehalten.

Der vorliegenden Erfindung liegt daher die Aufgabe zugrunde, einen oben offenen Behälter der eingangs genannten Art zu schaffen, der in den Seitenwänden eine erhöhte Festigkeit aufweist und dadurch vielseitiger einsetzbar und wirtschaftlicher herstellbar ist, als die bekannten Behälter.

Diese Aufgabe wird erfindungsgemäß dadurch gelöst, daß an der Unterseite der Flansche der Seitenwände Flanschabschnitte der dreieckigen Zwickelflächen angelegt sind.

Ferner sind unterbrochene Schnittlinien zwischen den Seitenwänden und den daran angelenkten Flanschabschnitten vorgesehen, wobei die Einschnitte der Schnittlinien im wesentlichen nur die siegelbare Beschichtung des Kartonmaterials durchtrennen. Dadurch wird ein Wellen der Seitenwände durch unterschiedliches Schrumpfen des Kartonmaterials und der Beschichtung vermieden.

Der durch die konstruktive Ausgestaltung bereits ausreichend stabile und steife Behälter kann somit durch die beim Backprozeß auftretende unterschiedliche Wärmeschrumpfung nicht deformiert werden und behält seine ursprüngliche ansprechende Form bei.

Eine vorteilhafte Ausgestaltung eines Behälters, der eine größere Länge als Breite aufweist, liegt erfindungsgemäß darin, daß die gefalteten Zwickelflächen an die entgegengesetzten Enden der Außenflächen der längeren Seitenwände des Behälters angelegt sind.

Hierdurch sind die aufgrund ihrer größeren Fläche besonders empfindlichen Seitenwände wirksam versteift.

Erfindungsgemäß ist bei einem länglichen Behälter vorgesehen, die Längsrichtung des Behälters quer zur Längsrichtung der Faserorientierung des Kartonmaterials anzuordnen. Da dadurch die Faserorientierung des Kartons in Richtung der kleineren Länge der Behälterfläche verläuft, wird eine weitere Versteifung des Behälters erzielt.

Eine weitere Versteifung des Behälters wird erfindungsgemäß dadurch erzielt, daß die gefalteten dreieckförmigen Zwickelflächen gesiegelt sind. Dabei kann zumindest eine Versiegelung der beiden Zwischenflächen gegeneinander vorgesehen werden. Bei entsprechender Außenbeschichtung des Behälters ist zusätzlich ein Ansiegeln der Zwickelflächen an der Behälteraußenseite möglich.

Sehr vorteilhaft ist es gemäß der Erfindung auch, wenn sich die dreieckförmigen Zwickelflächen über die volle Behälterhöhe erstrecken. Damit wird zum einen eine verhältnismäßig hohe Steifigkeit des Behälters erzielt und zum anderen dessen Dichtigkeit gewährleistet.

Eine vorteilhafte Ausgestaltung eines Behälters ist erfindungsgemäß dadurch gekennzeichnet, daß der Behälter aus einem Kartonzuschnitt hergestellt ist, der miteinander verbundene Längs- und Endseiten bildende Zuschnittabschnitte aufweist. Der Kartonzuschnitt ist mit einem hitzebeständigen und siegelfähigen Film beschichtet.

Die Zuschnittabschnitte beinhalten einen Boden, Seitenwände und Endwände, wobei zwischen den Seiten- und Endwänden Paare von dreieckförmigen Zwickelflächen angeordnet sind, welche die Seiten und Endwände miteinander verbinden, und die auf entgegengesetzte Enden der längeren Seitenwände gefaltet und durch Siegeln festgelegt sind. Das Festlegen der Zwickelflächen an den Seitenwänden erfolgt dabei zweckmäßiger Weise durch Zusammensiegeln der einander überlappenden Flansche. Es ist aber auch ein direktes Ansiegeln der Zwickelflächen an den Seitenwänden möglich.

Die Erfindung bezieht sich auch auf einen Kartonzuschnitt zum Herstellen des Behälters, wobei erfindungsgemäß der Zuschnitt mit einem Kunststoffilm beschichtet ist, welcher einen größeren Schrumpfkoeffizienten als das Kartonmaterial hat. Der Zuschnitt ist durch mehrere längs und quer verlaufende, paarweise angeordnete Rillinien unterteilt, wodurch die einzelnen Behälterflächen geformt sind. Dabei ist ein länglicher, rechteckiger Mittelabschnitt vorgesehen, welcher den Boden des Behälters bildet, sowie Paare von Seiten- und Endwänden, welche sich über den Rand des rechteckigen Mittelabschnittes erstrecken. Die Ecken des Zuschnittes bilden Paare von dreieckförmigen Zwickelflächen, wobei jedes Paar dieser Zwickelflächen in sich und gegen die Außenseite der längeren Seitenwand faltbar ist, wobei zwischen den Zwickelflächen und der Seitenwand Rillinien vorgesehen sind. An den Seitenwänden bzw. den Endwänden sind schmale Flansche angeformt, die von den Seiten- bzw. Endwänden durch unterbrochene Schnittlinien abgeteilt sind.

Die Erfindung bezieht sich auch auf einen Behälter mit einem Deckel zum Verschließen des Behälters, wobei erfindungsgemäß der Deckel in seinen Abmessungen im wesentlichen den Abmessungen des Behälters, einschließlich der Flansche, entspricht. Im Abstand voneinander und parallel zueinander ist jeweils ein Paar von Aufreißlinien angeordnet, welche durch Schnittlinien auf den beiden entgegengesetzten Oberflächen des Deckels gebildet sind, wobei diese Schnittlinien nur bis zum Ende der jeweiligen Materialschicht des aus mindestens zwei Schichten bestehenden Deckels reichen. Die Schnittlinie auf der Innenseite des Deckels ist dabei dem Behälterinneren zugewandt.

Erfindungsgemäß ist es besonders vorteilhaft, wenn an einer Ecke des Deckels eine Aufreißlasche durch Schnittlinien gebildet ist.

Eine ebenfalls sehr vorteilhafte Ausgestaltung liegt erfindungsgemäß darin, daß die Schnittlinien des Deckels im wesentlichen im gleichen Abstand zum Außenrand des Deckels angeordnet sind, und daß in einer Ecke des Deckels eine Aufreißzunge vorgesehen ist, die aus zwei U-förmig verlaufenden, zueinander parallelen und im Abstand voneinander angeordneten Schnittlinien gebildet ist, die von den beiden entgegengesetzten Oberflächen des Deckels her angebracht sind. Hiermit ist eine Aufreißhilfe geschaffen, die nicht über den Behälter bzw. dessen Deckel vorsteht und trotzdem leicht zu erfassen ist.

Erfindungsgemäß ist bei einem Behälter aus einem verhältnismäßig leichten Kartonmaterial und einem Deckel, der mit einer wenigstens im Randbereich angeordneten Siegelschicht versehen ist, vorgesehen, daß der Deckel parallele, im Abstand voneinander angeordnete Aufreißlinien aufweist, welche jeweils an der äußeren bzw. an der inneren Oberfläche des Deckels angeordnet sind und sich wenigstens über einen Großteil des Umfangs des Behälters erstrecken. Die äußere dieser beiden Aufreißlinien ist in einem Abstand von der Außenkante des Deckels angeordnet, der kleiner ist als die Breite des Flansches, während sich die innere Aufreißlinie im Bereich der Kante zwischen Behälter und Flansch erstreckt.

Erfindungsgemäß ist es besonders vorteilhaft, wenn die innere Aufreißlinie durch Schnitte gebildet wird, welche die Beschichtung durchtrennen und eine geringere Eindringtiefe als die Stärke des Deckelmaterials haben.

Bei einem Behälter mit einer inneren Beschichtung des Deckels lediglich im Randbereich, ist erfindungsgemäß vorgesehen, daß die innere Aufreißlinie durch die innere Randkante der Beschichtung gebildet ist. Dadurch ist es möglich, mit nur einer Schnittlinie für die beiden Aufreißlinien auszukommen.

In der Zeichnung sind mehrere Ausführungsbeispiele der Erfindung veranschaulicht. Dabei zeigt

Fig. 1 eine schaubildliche Darstellung eines schalenförmigen Behälters, der mit einem aufgesiegelten Deckel versehen ist,

Fig. 2 eine Ansicht des Behälters nach Fig. 1 auf die Seitenwand gesehen,

Fig. 3 eine Draufsicht des Behälters nach Fig. 1 und abgelösten Deckel,

Fig. 4 einen Schnitt durch den Behälter nach Fig. 2 entlang der Linie 4-4,

Fig. 5 einen vergrößerten Abschnitt des Querschnitts nach Linie 5-5 in Fig. 2,

Fig. 6 eine Draufsicht eines Zuschnittes zum Herstellen des Behälters nach Fig. 1,

Fig. 7 eine schaubildliche Darstellung eines weiteren Behälters,

Fig. 8 eine Draufsicht eines teilweise abgebrochenen Behälters gemäß Fig. 7,

Fig. 9 eine Draufsicht eines Behälters entsprechend Fig. 8 mit teilweise geöffnetem Deckel,

Fig. 10 eine Draufsicht eines Behälters gemäß Fig. 7—9 mit vollständig herausgelöstem Deckel,

Fig. 11 eine vergrößerte Schnittdarstellung entlang Linie 11-11 in Fig. 8,

Fig. 12 eine weitere Schnittdarstellung,

Fig. 13 eine Teilansicht eines Behälters mit anders ausgestalteter Aufreißzunge und

Fig. 14 eine Teilansicht gemäß Fig. 13 mit teilweise herausgelöstem Deckel.

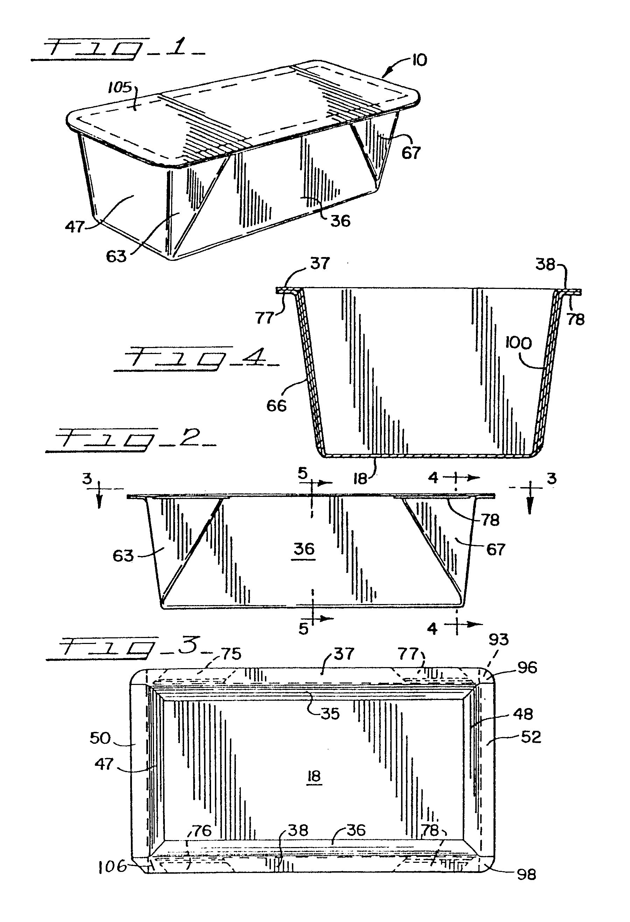

Mit 10 ist in Fig. 1 ein Behälter bezeichnet, der aus einem Kartonzuschnitt 12 aufgerichtet ist, wie er insbesondere in Fig. 6 dargestellt ist, dessen sichtbare Oberseite die Innenseite des Behälters bildet. Der Zuschnitt 12 besteht aus Karton von verhältnismäßig leichtem Gewicht, der mit einem hitzebeständigen Material beschichtet oder laminiert ist. Der Karton hat ein Flächengewicht, welches eine ausreichende Steifigkeit des geformten Behälters gewährleistet, damit er seine Form beibehält, wenn er mit dem Produkt gefüllt wird. Das Kartonmaterial ist mit einer Kunststoffbeschichtung versehen, welche seine Widerstandsfähigkeit gegen Wärmeabsorption soweit erhöht, daß es Backofentemperaturen standhalten kann und welches ebenso die Heißsiegelbarkeit ermöglicht.

Der Kartonzuschnitt 12 hat eine größere Länge als Breite, damit ein Laib Brot darin hergestellt werden kann. Der Zuschnitt ist so aus dem Kartonmaterial ausgestanzt, daß die Behälterbreite parallel zur Faserlängsrichtung des Kartonmaterials (Pfeil 13) verläuft. Der Zuschnitt ist so geschnitten und gerillt, daß er sich symmetrisch zu den längs und quer verlaufenden Linien a-a und b-b (Fig. 6) erstreckt. Der Zuschnitt ist durch parallele, längsverlaufende, im Abstand voneinander angeordnete Rillinien 14, 15 und ebenfalls parallel querverlaufende und mit Abstand voneinander angeordnete Rillinien 16, 17 unterteilt. Diese Linien begrenzen einen Boden 18, an welchen Längsseiten bildende Zuschnittabschnitte 20, 22 sowie Endseiten bildende Zuschnittabschnitte 23, 24 angeformt sind. Diese Zuschnittabschnitte 20, 22 bzw. 23, 24 sind an den vier Ecken des Zuschnittes über Eckverbindungsabschnitte 25, 26, 27, 28 verbunden.

Die querverlaufende Rillinien 16, 17 sind an ihren Enden durch Rillinien 30, 32, 33, 34 verlängert. Die Rillinien 30 und 33 bzw. 32 und 34 divergieren zueinander und begrenzen jeweils eine Seitenwand 35 bzw. 36.

An den Seitenwänden 35 und 36 sind verhältnismäßig schmale Flansche 37 und 38 angeformt. Die Verbindung zwischen der jeweiligen Seitenwand 35 bzw. 36 und dem Flansch 37 bzw. 38 wird durch eine unterbrochene Schnittlinie 40, 42 gebildet. Diese unterbrochenen Schnittlinien 40, 42 verlaufen parallel zu den Rillinien 14, 15. Die längs verlaufenden Rillinien 14, 15 sind an ihren Enden durch Rillinien 43, 44 bzw. 45, 46 verlängert, wobei die Rillinien 43 und 45 bzw. 44 und 46 zueinander divergieren und Endwände 47 bzw. 48 zwischen sich einschließen.

Die Endwände 47, 48 haben an ihren äußeren Begrenzungskanten verhältnismäßig schmale Flansche 50 und 52, welche durch unterbrochene Schnittlinien 53, 54 von den Endwänden abgeteilt sind. Diese unterbrochenen Schnittlinien 53, 54 verlaufen parallel zu den Rillinien 16 und 17. Die Eckverbindungsabschnitte 25, 26, 27, 28 sind jeweils durch Faltlinien 55, 56, 57, 58 in Paare von dreieckförmigen Zwickelflächen 60, 62; 63, 64; 65, 66; 67, 68 unterteilt. Die beiden dreieckförmigen Zwickelflächen 60, 62 verbinden die Seitenwand 35 und die Endwand 47 und die dreieckförmigen Zwickelflächen 63, 64 die Seitenwand 36 und die Endwand 47 auf der einen Seite des Zuschnittes. Auf der anderen Seite des Zuschnittes verbinden dreieckförmige Zwickelflächen 65, 66 die Seitenwand 35 und die Endwand 48 sowie dreieckförmige Zwickelflächen 67, 68 die Seitenwand 36 und die Endwand 48. Die Außenkanten 70, 72, 73, 74 der dreieckförmigen Zwickelflächen 60, 64, 65, 68 verlaufen senkrecht zu den Rillinien 30, 32, 33, 34 und enden an der oberen Kante der Seitenwände 35, 36, so daß jedes Paar der dreieckförmigen Zwickelflächen 60, 62; 63, 64; 65, 66; 67, 68 auf die Außenseite der jeweiligen Seitenwand 35, 36 gefaltet werden kann, wobei die dreieckförmigen Zwickelflächen lediglich einen geringen Abstand von den oberen Kanten der Seitenwände haben. Die Zwickelflächen 62, 63 und 66, 67, welche an den Endwänden 47, 48 angrenzen, haben schmale Flansche 75, 76, 77, 78, die von den Zwickelflächen durch unterbrochene Schnittlinien 80, 82, 83, 84 abgeteilt sind.

Die Flansche 75, 76, 77, 78 haben eine Breite, die geringfügig kleiner ist, als die an den Seiten- bzw. Endwänden angeformten Flansche 37, 38, 50, 52. Dadurch sind diese Flansche 75, 76, 77, 78 unter die Flansche 37, 38, 50, 52 faltbar. Die Flansche 75, 76, 77, 78 sind an ihren den Flanschen der Endwände 50, 52 zugekehrten Seiten entlang von Linien 85, 86, 87, 88 abgeschnitten, wodurch an den Flanschen 50, 52 schmale Nasen 90, 92, 93, 94 entstehen. Die Flansche 37, 38 an den Seitenwänden 35, 36 sind an ihrem jeweiligen Ende mit angeformten Lappen 95, 96 bzw. 97, 98 versehen, die im aufgerichteten Zustand des Behälters die schmalen Nasen 90, 92, 93, 94 überlappen. Die unterbrochenen Schnittlinien 40, 42, 53, 54, 80, 82, 83, 84 sind durch im Abstand voneinander angeordnete Einschnitte im Zuschnittmaterial gebildet, wobei diese Einschnitte lediglich den Kunststoffilm 100 perforieren und nicht durch die Kartonschicht dringen. Die Zwischenräume zwischen den Einschnitten können gerillt sein, da bereits die Einschnitte das Falten ermöglichen. Die Einschnitte entlang den Linien 80, 82, 83, 84 können an der Außenseite des Zuschnittes angebracht sein und können sich durch die Kartonlage 102 und durch den Kunststoffilm hindurch erstrecken.

Zum Aufrichten des Behälters 10 aus dem Zuschnitt 12 werden die Endwände 47 und 48 um die Rillinien 16, 17 gleichzeitig mit den Seitenwänden 35, 36 um die Rillinien 14, 15 gefaltet. Die Eckverbindungsabschnitte 25, 26, 27, 28 werden mit den End- und Seitenwänden gefaltet und die zwei Hälften der dreieckförmigen Zwickelflächen werden aufeinandergefaltet. Außerdem werden sie entlang der Linien 30, 32, 33, 34 zur Anlage an den Außenseiten der Seitenwände 35, 36 umgefaltet, wobei die Flansche 75, 77, 76, 78 mit ihrer siegelfähig beschichteten Seite gegen die Außenseite der Flansche 37, 38 gelegt werden, wodurch sie miteinander versiegelbar sind. Zuerst werden die an den Endwänden 47, 48 angeformten Flansche 50, 52 nach außen gefaltet, worauf auch die Flansche 37, 38 der Seitenwände 35, 36 nach außen umgefaltet werden, wodurch die Lappen 95, 96, 97, 98 die Nasen 90, 92, 93, 94 überlappen und mit diesen versiegelbar sind.

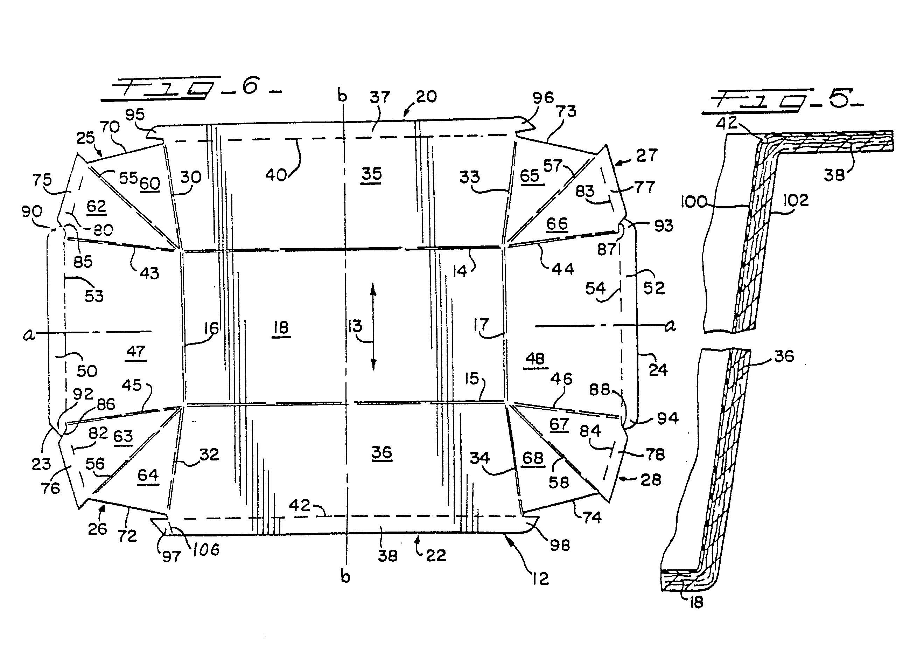

In Fig. 5 ist der Zweck der unterbrochenen Schnittlinien 42 (40, 53, 54 nicht sichtbar) dargestellt. Der Kunststoffilm 100 und das Kartonmaterial 102 haben wesentlich voneinander abweichende Schrumpf- und Dehnungswerte, wenn sie erhitzt oder gekühlt werden. Durch die unterbrochenen Schnittlinien wird dabei ein Wellen und Verformen der Seiten- und Endwände verhindert.

Eine Ausführungsform eines getrennten Deckels 105 ist in Fig. 1 dargestellt. Dieser Deckel ist an seinen Rändern mit den Flanschen 37, 38, 50, 52 versiegelt, um den Behälter zu verschließen. Um das Öffnen des Deckels zu erleichtern, ist ein Eckabschnitt 96 (Fig. 3) des Randflansches abgeschnitten oder durch eine Schnittlinie 106 (Fig. 3) geschwächt.

In den Fig. 7 bis 14 sind verschiedene Deckelausführungen dargestellt. Fig. 7 zeigt einen Deckel 110 mit einem Mittelabschnitt 112, der einen Randabschnitt 114 (Fig. 2), welcher vom Mittelabschnitt 112 durch eine äußere oder sich nach oben erstreckende Schnittlinie 116 (Fig. 11) und eine innere oder sich nach unten erstreckende Schnittlinie 118 (Fig. 11) abgeteilt ist. Wie in Fig. 11 gezeigt, enthält der Behälter 10 das Kunststoffmaterial 100, welches auf das Kartonmaterial 102 aufgebracht ist. Das Verbundmaterial ist zu einem schalenförmigen Behälter 10, 10a aufgerichtet, der eine Seitenwand 36 und einen Flansch 38 enthält.

Der Randabschnitt 114 ist aus einer Kartonlage 120 und einer Kunststofflage 122 hergestellt. Die äußere Schnittlinie 116, welche den Mittelabschnitt 112 des Deckels 110 vom Randabschnitt 114 abteilt, erstreckt sich lediglich durch die Kartonlage 120 und liegt innerhalb der Fläche des Flansches 38. Weiterhin ist zum Abteilen des äußeren Randabschnittes 114 vom Mittelabschnitt des Deckels die innere Schnittlinie 118 vorgesehen, welche sich nur durch die Kunststofflage 122 erstreckt. Sie liegt nahe der Kante zwischen Seitenwand 36 und Flansch 38. Folglich wird der Schwächungsbereich, welcher den Mittelabschnitt 112 vom Randabschnitt 114 abteilt, durch zwei Schnittlinien gebildet, welche wenig versetzt zueinander sind.

Zum Öffnen des Behälters durch Abtrennen des Deckels vom Behälter 10a wird eine Aufreißlasche 124, welche durch Schnittlinien 126, 128 abgeteilt ist, ergriffen und nach oben abgezogen.

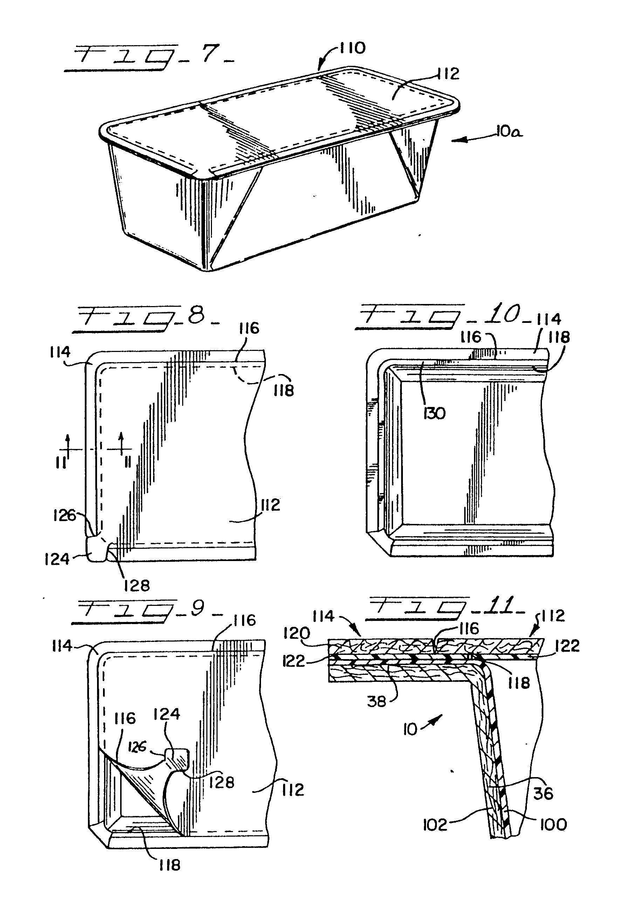

Wie in Fig. 9 dargestellt, wird der Mittelabschnitt 112 nach oben gezogen, wobei die Abtrennung entlang der Schnittlinien 116, 118 eintritt. Dadurch wird der Deckel geöffnet.

In Fig. 10 ist ein Behälter dargestellt, dessen Deckel entfernt ist, wobei der Randabschnitt 114 des Deckels auf dem Flansch verblieben ist, um diesen zu verstärken, während ein Rand 130 der Kunststofflage 122 auf dem Kunststoffmaterial 100 des Behälters verblieben ist (Fig. 12). Durch die abgesetzte Anordnung der Schnittlinien 116, 118 ist eine luftdichte Verpackung erreicht, obwohl die Entfernung des Mittelabschnittes 112 des Deckels 110 verhältnismäßig einfach durchzuführen ist.

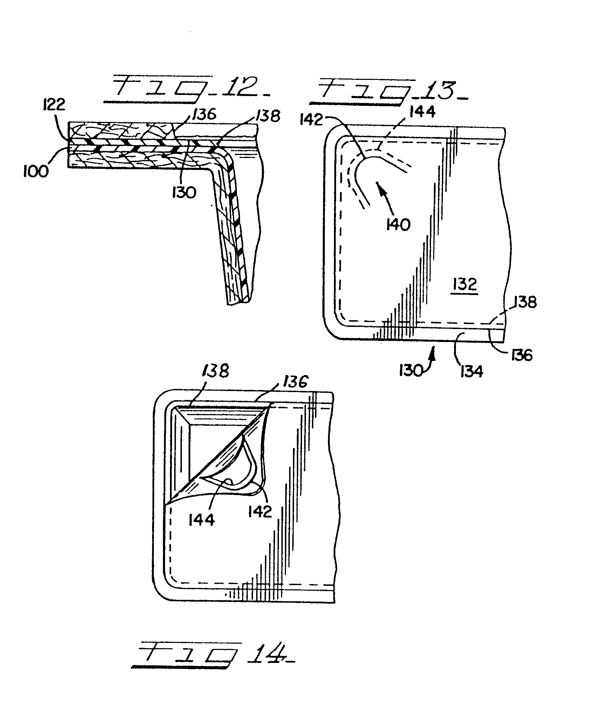

Die Fig. 13 und 14 zeigen die abgewandelte Form eines Deckels 101, welcher einen Mittelabschnitt 132 und einen Randabschnitt 134 umfaßt, wobei zwischen beiden eine äußere Schnittlinie 136 und eine innere Schnittlinie 138 vorgesehen sind. Der einzige Unterschied dieser Ausführung ist eine Aufreißzunge 140, die parallel zueinander angeordnete, U-förmige Schnittlinien 142, 144 umfaßt. Die Aufreißzunge 140 ist im Bereich einer Ecke des Deckelmittelabschnittes 132 angeordnet.

Zum Öffnen wird die Aufreißzunge nach oben gezogen und entlang der Linie 142 abgetrennt. Die Schnittlinie 144 auf der inneren Oberfläche des Deckels erlaubt eine vollständige Trennung der Aufreißzunge 140 vom übrigen Deckel und dieser kann dann, wie in Fig. 14 dargestellt, vom Behälter abgezogen werden. Diese Ausgestaltung stellt sicher, daß ein unbeschädigter und fest angesiegelter Außenrand erhalten bleibt.

So ist gewährleistet, daß diese Deckelkonstruktionen, welche die abgesetzten oder im Abstand voneinander angeordneten Schnittlinien vorsehen, eine gute Versiegelung, leichte Öffnungsmöglichkeiten sowie eine Versteifung des Behälterrandes bewirken.

## Patentansprüche

1. Ein schalenförmiger Behälter (10) zum Erzeugen und Verpacken eines Brotes oder ähnlichen Backprodukten, der aus einem einzigen Kartonzuschnitt geformt ist und mit einer siegelfähigen und hitzebeständigen Beschichtung versehen ist, wobei die Beschichtung einen größeren Wärmekoeffizienten als das Kartonmaterial hat, wobei der Behälter (10) einen Boden (18) aufweist, sowie daran angelenkte Seitenwände (35, 36) und Endwände (47, 48), und an End- und Seitenwänden angelenkte, untereinander durch jeweils eine Faltlinie (55, 56, 57, 58) verbundene dreieckige Zwickelflächen (60, 62; 63, 64; 65,66; 67, 68), welche die aneinander angrenzenden Seiten- und Endwände untereinander verbinden, wobei die zusammengefalteten Zwickelflächen an der Außenseite von einander gegenüberliegenden Seitenwänden angelegt sind und wobei die Seitenwände (35, 36) Flansche (37, 38) aufweisen, dadurch gekennzeichnet, daß an der Unterseite der Flansche (37, 38) der Seitenwände (35, 36) Flanschabschnitte (75, 76, 77, 78) der dreieckigen Zwickelflächen (62, 63; 66, 67) angelegt sind, und daß unterbrochene Schnittlinien (40, 42) zwischen den Seitenwänden (35, 36) und den daran angelenkten Flanschabschnitten (37, 38) vorgesehen sind, wobei die Einschnitte dieser Schnittlinien im wesentlichen nur die siegelbare Beschichtung (100) des Kartonmaterials durchtrennen.

2. Behälter nach Anspruch 1, wobei der Behälter eine größere Länge als Breite aufweist, dadurch gekennzeichnet, daß die gefalteten Zwickelflächen (60, 62; 63, 64; 65, 66; 67, 68) an die entgegengesetzten Enden der Außenflächen der längeren Seitenwände (35, 36) des Behälters (10) angelegt sind.

3. Behälter nach Anspruch 2, dadurch gekennzeichnet, daß die Längsrichtung des Behälters (10) quer zur Längsrichtung (13) der Faserorientierung des Kartonmaterials vorgesehen ist.

4. Behälter nach Anspruch 1, 2 oder 3, dadurch gekennzeichnet, daß die gefalteten dreieckförmigen Zwickelflächen (60, 62; 63, 64; 65, 66; 67, 68) gesiegelt sind.

5. Behälter nach einem der vorhergehenden Ansprüche, dadurch gekennzeichnet daß sich die dreieckförmigen Zwickelflächen (60, 62; 63, 64; 65, 66; 67, 68) über die volle Behälterhöhe erstrecken.

6. Behälter nach einem der vorhergehenden Ansprüche, dadurch gekennzeichnet, daß der Behälter aus einem Kartonzuschnitt (12) hergestellt ist, der miteinander verbundene Längs- und Endseiten bildende Zuschnittabschnitte (20, 22, 23, 24) aufweist und mit einem hitzebeständigen und siegelfähigen Film (100) beschichtet ist, wobei die Zuschnittabschnitte einen Boden (18), Seitenwände (35, 36) und Endwände (47, 48) beinhalten und wobei zwischen den Seiten- und Endwänden Paare von dreieckförmigen Zwickelflächen (60, 62; 63, 64; 65, 66; 67, 68) angeordnet sind, welche die Seiten- und Endwände miteinander verbinden und die auf entgegengesetzte Enden der längeren Seitenwände (35, 36) gefaltet und durch Siegeln festgelegt sind.

7. Kartonzuschnitt zum Herstellen des Behälters nach einem der vorhergehenden Ansprüche, dadurch gekennzeichnet, daß der Zuschnitt (12) mit einem Kunststofffilm (100) beschichtet ist, welcher einen größeren Schrumpfkoeffizienten als das Kartonmaterial hat und daß der Zuschnitt (12) durch mehrere längs und quer verlaufende, paarweise angeordnete Rillinien (14, 15, 16, 17) unterteilt ist, wodurch die einzelnen Behälterflächen geformt sind, mit einem länglichen, rechteckigen Mittelabschnitt, welcher den Boden (18) des Behälters bildet, sowie mit Paaren von Seitenwänden (35, 36) und Endwänden (47, 48), welche sich über den Rand des Mittelabschnittes (Boden 18) erstrecken und wobei die Ecken des Zuschnittes Paare von dreieckförmigen Zwickelflächen (60, 62; 63, 64; 65, 66; 67, 68) bilden, wobei jedes Paar dieser Zwickelflächen in sich und gegen die Außenseite der längeren Seitenwand faltbar ist, wobei zwischen den Zwickelflächen und der Seitenwand Rillinien (30, 32, 33, 34) vorgesehen sind, sowie mit schmalen Flanschen (37, 38 bzw. 50, 52), welche an den Seitenwänden (35, 36) bzw. den Endwänden (47, 48) angeformt sind und von diesen durch unterbrochene Schnittlinien (40, 42 bzw. 53, 54) abgeteilt sind.

8. Behälter nach einem der Ansprüche 1—6, mit einem Deckel zum Verschließen des Behälters, dadurch gekennzeichnet, daß der Deckel (105) in seinen Abmessungen im wesentlichen den Abmessungen des Behälters (10) einschließlich der Flansche (37, 38, 50, 52) entspricht, mit einem Paar, im Abstand voneinander und parallel zueinander angeordneten Aufreißlinien, welche durch Schnittlinien (116, 118; 136, 138) auf den beiden entgegengesetzten Oberflächen des Deckels (105) gebildet sind, wobei diese Schnittlinien nur bis zum Ende der jeweiligen Materialschicht des aus mindestens zwei Schichten (120, 122) bestehenden Deckels reichen und wobei die Schnittlinie auf der Innenseite des Deckels dem Behälterinneren zugewandt ist.

9. Behälter nach Anspruch 8, dadurch gekennzeichnet, daß an einer Ecke des Deckels (105) durch Schnittlinien (126, 128) eine Aufreißlasche (124) gebildet ist.

10. Behälter nach Anspruch 8, dadurch gekennzeichnet, daß die Schnittlinien (136, 138) des Deckels im wesentlichen im gleichen Abstand zum Außenrand des Deckels (105) angeordnet sind und daß in einer Ecke des Deckels eine Aufreißzunge (140) vorgesehen ist, die aus zwei U-förmig verlaufenden zueinander parallelen und im Abstand voneinander angeordneten Schnittlinien (142, 144) gebildet ist, die von den beiden entgegengesetzten Oberflächen des Deckels her angebracht sind.

11. Behälter nach einem der Ansprüche 1—6 und 8-10, aus einem verhältnismäßig leichten Kartonmaterial und mit einem Deckel, der mit einer wenigstens im Randbereich angeordneten Siegelschicht versehen ist, dadurch gekennzeichnet, daß der Deckel (101, 105, 110) parallele, im Abstand voneinander angeordnete Aufreißlinien (116, 118; 136, 138) aufweist, welche jeweils an der äußeren bzw. an der inneren Oberfläche des Deckels angeordnet sind und sich wenigstens über einen Großteil des Umfangs des Behälters (10, 10a) erstrecken, wobei die äußere dieser beiden Aufreißlinien (116, 136) in einem Abstand von der Außenkante des Deckels angeordnet ist, der kleiner ist als die Breite des Flansches und daß sich die innere Aufreißlinie (118, 138) im Bereich der Kante zwischen Behälter und Flansch erstreckt.

12. Behälter nach Anspruch 11, dadurch gekennzeichnet, daß die innere Aufreißlinie (118, 138) durch Schnitte gebildet wird, welche die Beschichtung (122) durchtrennen und eine geringere Eindringtiefe als das Deckelmaterial haben.

13. Behälter nach Anspruch 11, mit einer inneren Beschichtung des Deckels lediglich im Randbereich, dadurch gekennzeichnet, daß die innere Aufreißlinie (138) durch die innere Randkante der Beschichtung (130) gebildet ist.

## Claims

1. A container (10) in the form of a tray for producing and packaging a loaf of bread or similar bakery products, said tray being formed from a single board blank having a sealable and heat resistant coating with a greater heat coefficient than the board material, said container (10) comprising a bottom wall panel (18), to which sidewall (35, 36) and end wall panels (47, 48) are hinged, and triangular webs (60, 62; 63, 64; 65, 66; 67, 68) that are hinged to end wall and sidewall panels, are joined together in each case by a folding line (55, 56, 57, 58) and join the ends of adjacent sidewall and end wall panels, with pairs of said folded webs secured to the outside faces of oppositely disposed sidewall panels, said sidewall panels (35, 36) having flanges (37, 38), wherein flange sections (75, 76, 77, 78) of the trianular webs (62, 63; 66, 67) are located on the bottom face of the flanges (37, 38) of the sidewall panels (35, 36) and wherein there are lines of skip-cutting (40, 42) between said sidewall panels (35, 36) and the flanges (37, 38) hinged to them with the cuts essentially severing only the sealable coating (100) of the board material.

2. A container as set forth in claim 1 where the container has greater length than width, wherein the folded webs of each pair thereof (60, 62; 63, 64; 65, 66; 67, 68) are disposed on opposite ends and on outside faces of the sidewall panels (35, 36) which extend lengthwise of the container (10).

3. A container as set forth in claim 2, wherein the container (10) is formed with the grain of the board material extending transversely (13) of the bottom and sidewall panels.

4. A container as set forth in claim 1, 2 or 3, wherein the folded triangular webs (60, 62; 63, 64; 65, 66; 67, 68) are sealed.

5. A container as set forth in one of the previous claims, wherein the triangular webs (60, 62; 63, 64; 65, 66; 67, 68) extend the full height of the container.

6. A container as set forth in one of the previous claims, wherein said container is produced from a board blank (12) comprising integrally connected blank sections (20, 22, 23, 24) forming sidewall and end wall panels and having a film coating (100) which is heat resistant and sealable, said blank sections including a bottom wall forming panel (18) and side (35, 36) and end (47, 48) wall forming panels with pairs of triangular web panels (60, 62; 63, 64; 65, 66; 67, 68) between said side and end wall panels connecting adjoining ends thereof which are folded against opposite ends of the longer sidewall forming panels (35, 36) and which are secured by sealing.

7. A board blank for production of the container as set forth in one of the previous claims, wherein the blank (12) is coated with a plastic film (100) having a greater shrink coefficient than the board material, said blank (12) being divided by several longitudinally and transversely extending pairs of crease lines (14, 15, 16, 17) so as to provide the individual container surfaces with an elongate rectangular center panel constituting a bottom wall forming panel (18) for the container, and pairs of side (35, 36) and end wall (47, 48) forming panels, extending over the perimeter of said center panel (bottom panel 18), the corners of said blank forming pairs of triangular webs (60, 62; 63, 64; 65, 66; 67, 68), each pair of which is adapted to be folded upon itself and against the outside face of the longer sidewall forming panel from which it is seperated by crease lines (30, 32, 33, 34) and narrow flanges (37, 38; 50, 52) at the outermost margins of said side (35, 36) and end (47, 48) wall forming panels which are divided from said wall forming panels by skip-cutting lines (40, 42; 53, 54).

8. A container as set forth in one of claims 1—6 with a cover member for closing the top of the container, wherein said cover member (105) has dimensions corresponding substantially to the dimensions of the container (10) including the flanges (37, 38; 50, 52), said cover member having a pair of spaced, parallel tearing lines which are defined by cutting lines (116, 118; 136, 138) on the two opposite faces of the cover member (105), said cutting lines only extending to the end of the respective material layer of the cover member which consists of at least two layers (120, 122) and the cutting line on the inside face of the cover member being located towards the inside of the container.

9. A container as set forth in claim 8, wherein said cover member (105) is cut (lines 126, 128) at one corner thereof to provide a pull tab (124). ·

10. A container as set forth in claim 8, wherein the cutting lines (136, 138) of said cover are substantially continuous about the margin of the cover member (105) and a tear out tab (140) is provided adjacent one of the corners of the cover which is defined by two U-shaped parallel, spaced cutting lines (142, 144) which are effected from the two opposite surfaces of the cover member.

11. A container as set forth in one of claims 1—6 and 8—10 which is formed from a relatively light weight board material and with a cover member having a seal forming coating at least around the marginal portions, wherein said cover member (101, 105, 110) has parallel spaced tearing line formations (116, 118; 136, 138) on the outer and inner faces of the cover member extending around at least a major portion of the peripheral margin of the container (10, 10a), the outer of these two tearing line formations (116, 136) being spaced from the peripheral edge of the cover member a distance which is less than the width of the flange and wherein the inner tearing line (118, 138) in the area of the edge extends between the container and the flange.

12. A container as set forth in claim 11, wherein the inner tearing line formation (118, 138) is formed by cuts which penetrate the coating (122) and have a depth less than the thickness of the cover member material.

13. A container as set forth in claim 11 with inner coating of the cover member only in the marginal portions, wherein the inner tearing line formation (138) is formed by the inner margin of the coating (130).

## Revendications

1. Récipient en forme de baguette (10) pour la production et le conditionnement du pain ou des pâtisseries, formé d'une seule coupe de carton, revêtu d'une couche mince apte à être thermoscellée et résistante à la chaleur, le revêtement ayant un coefficient thermique plus élevé que la matière cu carton, le récipient (10) étant formé d'un fond (18) et de parois latérales (35, 36) et finales (47, 48) adjacentes, ayant elles-mêmes des coins triangulaires (60, 62; 63, 64; 65, 66; 67, 68) adjacents, joints réciproquement par des lignes de pliage (55, 56, 57,58), lesdits coins liant les parois latérales voisines de manière à ce que les coins pliés soient placés contre les faces extérieures des parois latérales opposées, les parois latérales (35, 36) étant munies de collets (37, 38), caractérisé en ce que des parties de collets (75, 76, 77, 78) des coins triangulaires (62, 63; 66, 67) sont fixées aux faces inférieures des collets (37, 38) des parois latérales (35, 36) et en ce que des lignes d'incision interrompues (40, 42) sont prévues entre les parois latérales (35, 36) et les collets voisins (37, 38), les incisions de ces lignes d'incision ne coupant essentiellement que le revêtement (100) apte à être thermoscellé du carton.

2. Récipient selon la revendication 1, le récipient ayant une longueur plus grande que la largeur, caractérisé en ce que les coins triangulaires pliés (60, 62; 63, 64; 65, 66; 67, 68) sont posés contre les bouts opposés des faces extérieures des parois latérales (35, 36) du récipient (10).

3. Récipient selon la revendication 2, caractérisé en ce que la direction longitudinale du récipient (10) est perpendiculaire à l'orientation des fibres (13) de la matière cu carton.

4. Récipient selon la revendication 1, 2 ou 3, caractérisé en ce que les coins triangulaires pliés (60, 62; 63, 64; 65, 66; 67, 68) sont thermoscellés.

5. Récipient selon l'une des revendications précédentes, caractérisé en ce que les coins triangulaires (60, 62; 63, 64; 65, 66; 67, 68) s'étendent sur toute l'hauteur du récipient.

6. Récipient selon l'une des revendications précédentes, caractérisé en ce que le récipient est formé d'une coupe de carton (12) composée de différentes parties liées formant ainsi les parois latérales et finales (20, 22, 23, 24), la coupe de carton étant revêtue d'une couche mince (100) apte à être thermoscellée et résistante à la chaleur, les parties de la coupe comprenant un fond (18), des parois latérales (35, 36) et finales (47, 48) ainsi que des paires de coins triangulaires (60, 62; 63, 64; 65, 66; 67, 68) entre les parois latérales et finales, joignant les parois latérales et finales, pliées aux bouts opposés des parois les plus longues (35, 36) et y fixées par thermoscellement.

7. Coupe de carton pour la réalisation du récipient selon l'une des revendications précédentes, caractérisée en ce que la coupe (12) est revêtue d'une couche mince en matière plastique (100), ayant un coefficient de rétrécissement plus grand que le carton et en ce que la coupe (12) est subdivisée par plusieures lignes de rainure (14, 15, 16, 17) jumelées, longitudinales et transversales, formant ainsi les faces différentes du récipient, avec une partie médiane rectangulaire oblongue, le fond (18) du récipient, et avec des paires de parois latérales (35, 36) et finales (47, 48) s'étendant au-delà du bord de la partie médiane (le fond 18) et avec des parties aux coins de la coupe formant des paires de coins triangulaires (60, 62; 63, 64; 65, 66; 67, 68), chaque paire desdits coins étant pliable en soi-même et aussi vers la face extérieure de la paroi la plus longue, entre les coins triangulaires et la paroi latérale étant prévues des lignes de rainure (30, 32, 33, 34), et avec des collets étroits (37, 38 et 50, 52) liés aux parois latérales (35, 36) et finales (47, 48) séparés des-quelles par des lignes d'incision (40, 42 et 53, 54) interrompues.

8. Récipient selon l'une des revendications 1—6 avec un couvercle pour fermer le récipient, caractérisé en ce que les dimensions du couvercle (105) correspondent essentiellement aux dimensions du récipient (10), les collets y sont inclus, avec une paire de lignes d'amorce de rupture parallèles et à distances égales, formées par des lignes d'incision (116, 118; 136, 138) aux deux surfaces opposées du couvercle (105), lesdites lignes d'incision ne pénétrant qu'au bout de la couche de la matière correspondante du couvercle, se composant au moins de deux couches (120, 122), la ligne d'incision de la surface intérieure se tournant vers l'intérieur du récipient.

9. Récipient selon la revendication 8, caractérisé en ce qu'à l'un des angles du couvercle (105) une patte d'amorce de rupture (124) est formée par des lignes d'incision (126, 128).

10. Récipient selon la revendication 8, caractérisé en ce que les lignes d'incision (136, 138) du couvercle sont établies essentiellement à distances égales par rapport au bord du couvercle (105) et en ce qu'à l'un des angles du couvercle une patte d'amorce de rupture (140) est prévue formée du deux lignes d'incision (142, 144) en U, parallèles et à distances égales, lesdites lignes étant incisées dans les deux surfaces opposées du couvercle.

11. Récipient selon l'une des revendications 1—6 et 8—10 d'un carton assez léger et avec un couvercle, prévu au moins à la zone de la bordure d'une couche apte à être thermoscellée, caractérisé en ce que le couvercle (101, 105, 110) a des lignes d'amorce de rupture (116, 118; 136, 138) parallèles, à distances égales, se trouvant à la surface extérieure respectivement à la surface intérieure du couvercle et s'étendant au moins sur la plupart du contour du récipient (10, 10a), la ligne extérieure de ces deux lignes d'amorce de rupture (116, 136) étant située à une distance du bord extérieur du couvercle qui est plus petite que la largeur du collet et caractérisé en ce que la ligne d'amorce de rupture intérieure (118, 138) est située dans la zone entre récipient et collet.

12. Récipient selon la revendication 11, caractérisé en ce que la ligne d'amorce de rupture (118, 138) intérieure est formée par des incisions coupant le revêtement (122), d'une profondeur plus petite que l'épaisseur de la matière du couvercle.

13. Récipient selon la revendication 11 avec un revêtement intérieur du couvercle seulement dans la zone de la bordure, caractérisé en ce que la ligne d'amorce de rupture (138) intérieure est constituée par le contour intérieur du revêtement (130).

FIG_1

FIG_4

FIG_2

FIG_3

_FIG_-6-

_FIG_-5-

*Fig_7_*

110

112

10a

*Fig_8_*

116

114

118

II
II

126

124

128

112

*Fig_10_*

114
116
118

130

112

*Fig_9_*

116

114

116  124

126

128

118

112

*Fig_11_*

114  116  112

120  122

122

118

38

10

36

102  100

_FIG_12_

122
136
138
100
130

_FIG_13_

142
144
140
132
138
136
130
134

138
136
144
142

_FIG_14_